# EUROPEAN PATENT SPECIFICATION

(11) **EP 3 165 408 B1**
(45) Date of publication and mention of the grant of the patent: **03.10.2018**
(21) Application number: 16195427.6
(22) Date of filing: 25.10.2016
(51) Int. Cl.: B60R 21/015

(54) **AUTOMATIC PASSENGER AIRBAG SWITCH**
AUTOMATISCHER INSASSENAIRBAGSCHALTER
DÉCLENCHEUR AUTOMATIQUE D'AIRBAG PASSAGER

(30) Priority: 08.11.2015 US 201514935443; 14.12.2015 US 201514967388; 26.07.2016 US 201615219942
(43) Date of publication of application: 10.05.2017
(73) Proprietor: Thunder Power New Energy Vehicle Development Company Limited, Central, Hong Kong (CN)
(72) Inventor: CHEN, Yong-Syuan, New Taipei City (TW); HSIAO, Jen-Chieh, Taipei City (TW)
(74) Representative: Meissner Bolte Partnerschaft mbB

(56) References cited:
- EP-A1- 2 436 549
- EP-A1- 2 743 141
- WO-A1-2004/071816
- US-A1- 2004 153 229
- US-A1- 2007 251 749
- US-A1- 2012 018 989

## Description

### BACKGROUND

Although an airbag system can often save an adult's life, it can cause serious damage, or even death, to a small child or infant. When traveling with a small child or infant, a driver may wish to turn on or off a passenger seat airbag. Manual airbag systems are problematic for a number of reasons. For example, a driver may not know how to turn the airbag system on or off. Additionally, the driver may forget to reactivate the airbag system upon removing the small child, which might result in the death of an adult riding in the passenger seat.

Traditional automatic airbag deployment systems have relied heavily upon pressure sensors to determine whether an airbag should be activated for a passenger seat. However, these systems are unreliable, and inherently unsafe, because the driver may place additional objects in the passenger seat along with a child. The additional weight may be enough to activate the passenger seat airbag in these traditional automatic airbag systems and can cause serious harm, or even death, to the child in the passenger seat in the event of an accident.

From EP 2 436 549 A1 a method and an apparatus for improving the operation of a motor vehicle for safety purposes and/or of safety systems in the motor vehicle is known such that said systems are individually adapted to at least the driver and/or one or more passengers of the vehicle, said method comprises sensing at least one physical characteristic and/or the position of at least the driver of the motor vehicle and providing a signal indicative thereof, determining the sex and/or age of said driver and providing a signal indicative thereof, and controlling, in response to said signals, the power of the engine of the vehicle and/or the safety systems in the vehicle such that said engine power and/or said safety systems are adapted to said driver. EP 2 743 141 A1 describes a control arrangement for one or more vehicle safety-arrangements, e.g. an airbag system. The control arrangement comprises a memory unit, a processing unit, and an imaging unit. At least one image depicting a person is arranged to be stored on the memory unit. Each one of the at least one image is associated with personal properties of the person depicted on the image, which are also arranged to be stored on the memory unit. The imaging unit is adapted to capture one or more images of occupants in the vehicle and the processing unit is adapted to compare the images captured with the images stored on the memory unit in order to identify vehicle occupants and their associated personal properties. The control arrangement is arranged to use personal properties identified to control one or more of the vehicle safety-arrangements.

### SUMMARY

The present disclosure solves these and other problems with the current technology. In particular, the disclosure provides an improved automatic airbag deployment system in which the airbag deployment device is activated or deactivated upon determining that an object situated in a vehicle seat is a person meeting one or more criteria. To do this, the automatic airbag deployment system described includes a number of sensors configured to detect various attributes of an object situated in the vehicle seat. Each of the sensors may be activated sequentially or simultaneously to gather input related to the object that may be processed by a processor device. As specified in the claims, the processor device receives digital image input from a camera sensor device, which may be processed, using one or more image processing techniques, to determine whether the object is a person meeting the one or more criteria.

An indication of an activation threshold is received from a service provider.

### BRIEF DESCRIPTION OF THE DRAWINGS

Various embodiments in accordance with the present disclosure will be described with reference to the drawings, in which:
FIG. 1A and 1B depicts an illustrative example of an airbag deployment system in accordance with at least some embodiments;
FIG. 2 depicts an illustrative example image processing technique in accordance with at least some embodiments;
FIG. 3 depicts system or architecture in which techniques for processing image information and activating/deactivating an airbag deployment device may be implemented in accordance with the disclosure;
FIG. 4 depicts an illustrative flow chart demonstrating an example automatic airbag deployment system on/off switch in accordance with at least some embodiments; and
FIG. 5 depicts an illustrative flow chart demonstrating an example process for providing instructions to an airbag deployment device in accordance with at least some embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Techniques described herein include an airbag deployment system configured to automatically activate and deactivate an airbag deployment device based on whether particular conditions are met. In some embodiments, the airbag deployment system may detect that a weight threshold has been met by an object or person situated in vehicle's passenger seat. In some embodiments, the airbag deployment system may include a height detection device configured to determine whether the height of the object or person situated in vehicle's passenger seat meets a threshold height. In some embodiments, the airbag deployment system may utilize one or more facial recognition techniques to determine an identity of a person in the passenger seat. The person's identity may be used to apply one or more personal configuration settings to the airbag deployment system.

In accordance with at least some embodiments, an airbag deployment system may be configured to activate a passenger airbag deployment device only when a person seated in the passenger seat meets certain criteria. The airbag deployment system may include a number of sensors designed to detect whether an object situated in the passenger seat of a vehicle is a person. In addition, the airbag deployment system may include a number of sensors configured to detect a weight, height, and/or age of the person seated in the passenger seat. The airbag deployment system may be configured to make a determination regarding an object positioned in the vehicle seat upon detecting an initialization event (e.g., a startup of the car's engine, buckling of a safety belt, closing of a door, etc.). For example, a weight or pressure applied to the vehicle seat may constitute an initialization event that triggers one or more of the described processes. If the passenger seat is not occupied by a person, or that person does not meet the weight, height, and/or age requirements, then the airbag deployment device may be shut off or deactivated.

In some embodiments, the verification process to determine whether a person meets the criteria for activating the airbag deployment device may be initiated by the airbag deployment system upon detecting a pressure or weight in the passenger seat. The weight of the passenger may be detected through the use of a weight or pressure sensor.

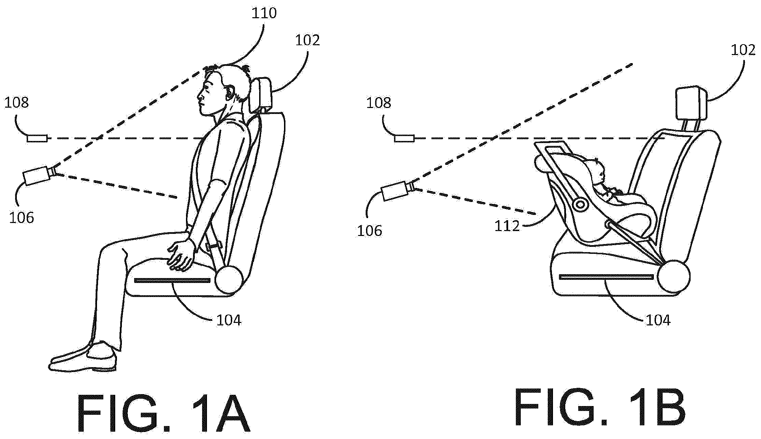

FIG. 1 depicts an illustrative example of an airbag deployment system in accordance with at least some embodiments. In order to better illustrate embodiments of the disclosure, FIG. 1 has been divided into FIG. 1A and FIG. 1B. In FIG. 1, a vehicle seat 102 of an airbag deployment system is depicted as having a pressure sensor 104. In some embodiments, the airbag deployment system may include a camera device 106 and/or a height detection device 108.

The pressure sensor 104 may be any device or sensor configured to detect a total amount of pressure applied to the vehicle seat 102. In some embodiments, the pressure sensor 104 may be a load cell (e.g., a hydraulic load cell, a strain gauge load cell, or a pneumatic load cell). In some embodiments, the airbag deployment system may include a processor device that compares an indication of the pressure detected by the pressure sensor against a pre-programmed threshold pressure. In some embodiments, the pressure sensor may be hard wired to provide a signal only if the pressure detected is greater than a predetermined threshold. For example, a load cell may be wired in series with a comparator circuit, such that a signal will be generated by the comparator circuit if a signal received from the load cell exceeds a threshold signal provided to the comparator circuit.

The camera device 106 may be any device configured to capture image information associated with an object in the vehicle seat 102. For example, the camera device 106 may be a digital camera. In some embodiments, the camera device 106 may be configured to capture video or a series of images. In some embodiments, the camera device 106 may be configured to capture images on a periodic basis. Image information captured by camera device 106 may be processed by a processing device, which will be described in greater detail below. The processing device may determine, from the image information captured by the camera 106, a location of at least one eye structure in the image information. The height detection device 108 may be any device configured to determine whether the height of an object or person situated in the vehicle seat 102 is greater than a threshold height. In some embodiments, the height detection device 108 may include one or more pyroelectric sensors capable of detecting infrared rays emitted by the human body. For example, the pyroelectric sensors may be installed on the ceiling of the vehicle to detect the height of the object (and whether the object is a person) by determining a distance of the object from the ceiling. In some embodiments, the height detection device 108 may comprise a light beam emitted across a space occupied by an object in the vehicle seat 102 at the height threshold. If the light beam is obstructed, then the height sensor 108 may determine that the height threshold has been met. In some embodiments, the camera device 106 may also be the height detection device 108. For example, one or more image processing techniques may be used to determine a person's height from an image of the person captured by the camera device 108.

In accordance with at least some embodiments, when the pressure sensor 104 detects that an object has been situated in vehicle seat 102, the camera device 106 may be activated. As depicted in FIG. 1A, the camera device 106 is able to capture images of a face belonging to a person 110 seated in vehicle seat 102. In some embodiments, the image of the face of person 110 may be processed using one or more facial recognition techniques to determine whether the airbag deployment device should be activated or deactivated. Alternatively, as depicted in FIG. 1B, if a car seat or other object is placed in the vehicle seat 102, the airbag deployment device may be deactivated.

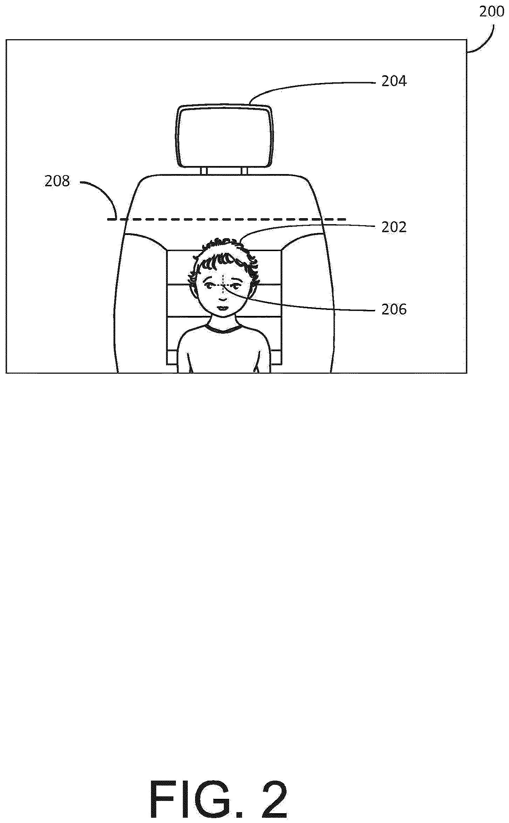

FIG. 2 depicts an illustrative example image processing technique in accordance with at least some embodiments. In FIG. 2, an image 200 is presented that depicts a person 202 seated in a vehicle seat 204. Image 200 may be an image captured by the camera device 108 depicted in FIG. 1. In some embodiments, the image processor may be configured to determine a location of an eye or eyes 206 associated with a person 202 within the image. The location of the eye or eyes 206 may be utilized by a processor device to determine whether the person 202 is of sufficient height that the airbag deployment device of the airbag system should be activated. For example, the processor device may be configured to determine whether the eye location 206 is above a height threshold 208. Upon determining that the eye location 206 is below a threshold height 208 in image 200, the airbag deployment device may be deactivated.

In some embodiments, an image processor may be configured to detect facial data information from the image 200. The facial data information from the image may be used to identify the person 202. For example, the facial data information may be compared to stored facial data information (either locally or at a remote server) in order to determine the identity of the person 202. In some embodiments, the person 202 may be associated with an account or configuration settings stored at a remote server. The configuration settings may include an indication of the person's age and/or airbag activation settings. For example, an image 200 captured by the airbag system may depict Johnny Child (a person 202). The image information may be processed, using one or more facial recognition techniques, to determine that the image is related to Johnny Child. Once Johnny Child has been identified, a profile for Johnny Child may be retrieved from a profile data store to determine that Johnny Child's age is 8. For example, the processor device may compare Johnny Child's birthdate (as stored in his profile information) to today's date. The processor device may then determine that the age of 8 is below an age threshold for activating the airbag deployment device of the airbag system, and may subsequently deactivate the airbag deployment device. In some embodiments, Johnny Child's profile information may include an indication that Johnny Child suffers from a medical condition that makes airbag deployment dangerous. The airbag deployment device may be deactivated in response to making that determination as well.

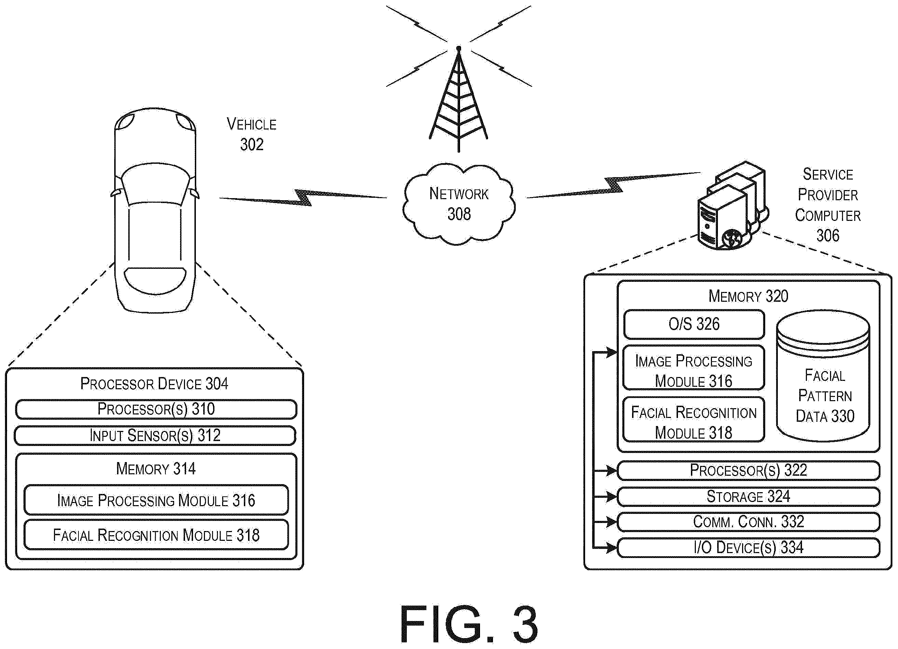

FIG. 3 depicts system or architecture in which techniques for processing image information and activating/deactivating an airbag deployment device may be implemented in accordance with the disclosure. In some examples, a vehicle 302 may include a processor device 304. In some embodiments, the processor device 304 may be configured to communicate with a service provider computer 306 via a network 308, or via other network connections. The processor device 304 or the service provider computer 306 may be configured to process an image received from a camera associated with the airbag deployment system and provide instructions for turning on or off the airbag deployment device.

The processor device 304 may be any type of computing device capable of performing the described functions. The processor device 304 may include one or more processors 310 capable of processing input from one or more input sensors 312. As is known in the art, there are a variety of input sensors 312 capable of detecting input related to a user or vehicle conditions, such as accelerometers, cameras, microphones, etc. The input obtained by the input sensors may be from a variety of data input types, including, but not limited to, audio data, visual data, or biometric data. Programmatic code for an application or module utilized in the implementation of at least some embodiments may be stored and executed from the memory 314 of processor device 304. The processor device 304 may include a module for processing image information to determine a viewer position (image processing module 316) and/or a module for implementing one or more facial recognition techniques (facial recognition module 318).

In some examples, the network(s) 308 may include any one or a combination of many different types of networks, such as cable networks, the Internet, wireless networks, cellular networks, and other private and/or public networks. It is also noted that the described techniques may apply in other client/server arrangements, as well as in non-client/server arrangements (e.g., locally stored applications, peer to-peer systems, etc.). In an exemplary embodiment, the processor device 304 may communicate with a network hub using one or more wireless communication networks (e.g., 3G, 4G, etc.). The network hub may, in turn, utilize a physical connection (e.g., copper cable, T1, Ethernet, etc.) to communicate with the service provider computer at a network address.

The service provider computer 306 may be any type of computing device such as, but not limited to, a mobile phone, a smart phone, a personal digital assistant (PDA), a laptop computer, a desktop computer, a server computer, a thin-client device, a tablet PC, etc. Additionally, it should be noted that, in some embodiments, the service provider computer 306 may be executed by one or more virtual machines implemented in a hosted computing environment. The hosted computing environment may include one or more rapidly provisioned and released computing resources, which computing resources may include computing, networking, and/or storage devices. A hosted computing environment may also be referred to as a cloud-computing environment.

In one illustrative configuration, the service provider computer 306 may include at least one memory 320 and one or more processing units (or processor(s)) 322. The processor(s) 322 may be implemented as appropriate in hardware, computer-executable instructions, firmware or combinations thereof. Computer-executable instruction or firmware implementations of the processor(s) 322 may include computer-executable or machine executable instructions written in any suitable programming language to perform the various functions described.

The memory 320 may store program instructions that are loadable and executable on the processor(s)310 and/or processor(s) 322, as well as data generated during the execution of these programs. Depending on the configuration and type of service provider computer 306, the memory 320 may be volatile (such as random access memory (RAM)) and/or non-volatile (such as read-only memory (ROM), flash memory, etc.). The service provider computer 306 may also include additional storage 324, such as either removable storage or non-removable storage including, but not limited to, magnetic storage, optical disks, and/or tape storage. The disk drives and their associated computer-readable media may provide non-volatile storage of computer-readable instructions, data structures, program modules, and other data for the computing devices. In some implementations, the memory 320 may include multiple different types of memory, such as static random access memory (SRAM), dynamic random access memory (DRAM) or ROM. Turning to the contents of the memory 320 in more detail, the memory 320 may include an operating system 326 and one or more application programs or services for implementing the features disclosed herein including at least a module for processing image information to determine a viewer position (image processing module 316) and/or a module for implementing one or more facial recognition techniques (facial recognition module 318. The memory 320 may also include pattern data 330, which provides data related to identifying portions of image information. In some embodiments, the pattern data 330 may be stored in a database.

The memory 320 and the additional storage 324, both removable and non-removable, are examples of computer-readable storage media. For example, computer-readable storage media may include volatile or non-volatile, removable or non-removable media implemented in any method or technology for storage of information such as computer-readable instructions, data structures, program modules or other data. As used herein, modules may refer to programming modules executed by computing systems (e.g., processors) that are part of the processor device 304 or the service provider computer 306. The service provider computer 306 may also contain communications connection(s) 330 that allow the service provider computer 306 to communicate with a stored database, another computing device or server, user terminals, and/or other devices on the network(s) 308. The service provider computer 306 may also include input/output (I/O) device(s) and/or ports 332, such as for enabling connection with a keyboard, a mouse, a pen, a voice input device, a touch input device, a display, speakers, a printer, etc.

Turning to the contents of the memory 320 in more detail, the memory 320 may include an operating system 326, a database containing pattern data 330 and the one or more application programs or services for implementing the features disclosed herein, including an image processing module 316 and/or a facial recognition module 318.

In some embodiments, the image processing module 316 may be configured to receive image information from one or more input sensors and identify a viewer position from the image information. The image processing module 316 may receive, as input, a digital image (or link to a digital image) and may provide, as output, a set of coordinates. The image processing module 316 may utilize one or more image processing techniques in order to identify image patterns within the received image that correspond to an eye or eyes. In the case that two eyes are identified, the image processing module 316 may output coordinates located halfway between both eyes. In the case that a single eye is identified, the image processing module 316 may output the coordinates of the identified eye. In the case that more than two eyes are identified, the image processing module 316 may return an error or determine the set of eyes that are most likely correct. For example, the image processing module 316 may determine a particular set of eyes is likely the correct set of eyes based on the position and/or orientation of each eye.

In some embodiments, the facial recognition module 318 may be configured to receive image information from one or more input sensors and identify a person from the image information. Once the person has been identified, a profile for that person may be retrieved from a profile data store to determine the person's age. The processor device 304 or service provider computer 306 may then determine whether the person's age is below an age threshold for activating the airbag deployment device of the airbag system, and may subsequently transmit a signal to activate or deactivate the airbag deployment device based on this determination. In some embodiments, the person's profile information may include an indication that the person suffers from a medical condition that makes airbag deployment dangerous. The processor device 304 or service provider computer 306 may also transmit a signal to activate or deactivate the airbag deployment device based on this determination.

Although described as being executed from the memory 320 of the service provider computer 306, the image processing module 316 and/or the facial recognition module 318 may be located on, and executed from, the memory 314 of the processor device 304. In embodiments in which one or more of the modules are located on the service provider computer 306, the instructions for activating or deactivating the airbag deployment device may be transmitted to the vehicle and executed by the airbag deployment system.

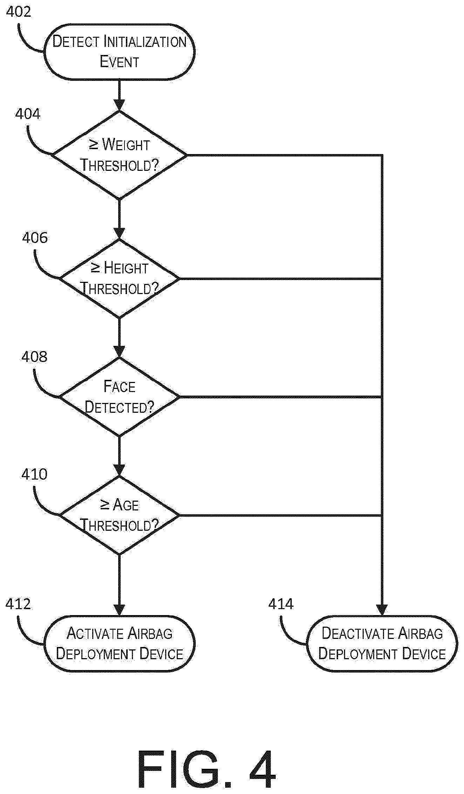

FIG. 4 depicts an illustrative flow chart demonstrating an example automatic airbag deployment system on/off switch in accordance with at least some embodiments. The process 400 is illustrated as a logical flow diagram, each operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be omitted or combined in any order and/or in parallel to implement this process and any other processes described herein.

Some or all of the process 400 (or any other processes described herein, or variations and/or combinations thereof) may be performed under the control of one or more computer systems configured with executable instructions and may be implemented as code (e.g., executable instructions, one or more computer programs or one or more applications). In accordance with at least one embodiment, the process 400 of FIG. 4 may be performed by at least the one or more service provider computers 306 and/or the processor device 304 shown in FIG. 3. The code may be stored on a computer-readable storage medium, for example, in the form of a computer program including a plurality of instructions executable by one or more processors. The computer-readable storage medium may be non-transitory.

Process 400 may begin at 402, when an initialization event is detected. For example, the process 400 may detect a startup of the car's engine, a buckling of a safety belt, a closing of a door, or the activation of a weight sensor in a vehicle seat. Upon detecting the initialization event, the process 400 may determine whether the object situated in the vehicle seat is a person meeting each of the threshold requirements to activate the airbag deployment device. It should be noted that although some orders for performing the activation threshold comparisons described will make more logical sense than others, each of the following activation threshold comparisons may be made in any order. Additionally, it should be noted that some embodiments of the disclosure will not include every activation threshold comparison described with respect to FIG. 4.

In some embodiments, the process 400 may compare the weight of the object placed into the vehicle seat against a threshold weight at 404. In some embodiments, activation threshold comparison 404 of the process 400 may be performed using a weight sensor, or a pressure sensor. For example, one or more load cells located in the vehicle seat may produce an electrical signal whose magnitude is directly proportional to the pressure applied to the vehicle seat. In some embodiments, the electrical signal may be provided to a comparator circuit to determine whether the electrical signal is greater than a threshold signal. In some embodiments, the magnitude of the electrical signal may be compared to a threshold value by the processor device. If the magnitude of the electrical signal is greater than the threshold value, then the process 400 may determine that the weight activation threshold comparison is a success.

In some embodiments, the process 400 may compare the height of the object placed into the vehicle seat against a threshold height at 406. In some embodiments, activation threshold comparison 406 of the process 400 may be performed using any device configured to detect a height of an object. In some embodiments, the process 400 may utilize a pyroelectric sensor, or other sensor, capable of detecting infrared rays emitted from a living body. In some cases, the pyroelectric sensors may be installed on the ceiling of the vehicle to detect the height of the object by determining a distance of the object from the ceiling. In some embodiments, the process 400 may utilize a light beam emitted across a space occupied by an object in the vehicle seat at the height threshold. If the light beam is obstructed, then the process 400 may determine that the height threshold has been met. In some embodiments, the process 400 may utilize a camera device to capture image information related to the object in the vehicle seat. A processor device may utilize one or more image processing techniques to determine the height of the object based on the image information. If the height of the object is met or exceeded, then the process 400 may determine that the height activation threshold comparison is a success.

In some embodiments, the process 400 may attempt to detect a face from image information captured with respect to the object situated in the vehicle seat at 408. In some embodiments, the process 400 may utilize a camera device to capture image information related to the object in the vehicle seat. A processor device may utilize one or more facial recognition techniques to identify a facial structure in the captured image information. In some embodiments, the process 400 may identify the person based on data produced using the facial recognition technique. In some embodiments, the process 400 may only determine if a face is present in the captured image, and may not attempt to determine an identity of the person in the image. If the process 400 detects a face, then the process 400 may determine that the object situated in the vehicle seat is a person and may consider the activation threshold at 408 a success.

In some embodiments, the process 400 may compare the age of the person situated in the vehicle seat against a threshold age at 410. In some embodiments, the processor device may use one or more facial recognition techniques to determine an age of a person seated in the vehicle seat. In some embodiments, the process 400 may determine an identity of the person seated in the vehicle seat and may identify a user profile associated with that person. The user profile may include one or more details related to the person, including an indication of the person's age or date of birth. The profile data may be used to determine whether the person seated in the vehicle seat passes an age activation threshold comparison.

In some embodiments, a personal profile may include an indication of whether or not to activate an airbag deployment device of the airbag deployment system. For example, even if a person meets or exceeds each of the activation threshold comparisons presented in process 400, the airbag deployment device may still be deactivated if the profile information includes a configuration setting to deactivate the airbag deployment device. For example, the person may have a medical condition that makes deployment of an airbag dangerous. The person's profile may therefore indicate that the airbag is to be deactivated. Upon identifying the person, using facial recognition techniques, the airbag deployment system may access the person's profile and subsequently deactivate the airbag deployment device in response to determining that the airbag should not be deployed.

Once each of the activation threshold comparisons has been met, an airbag deployment device may be activated, or turned on, at 412. If one or more of the activation threshold comparisons have been failed, then it may be unsafe or unnecessary to activate the airbag deployment device. In that case, the airbag deployment device may be deactivated, or turned off, at 414. It should be noted that the airbag deployment device may be placed in either an activated state or a deactivated state as a default state. For example, the airbag deployment device may begin in a deactivated state. In this example, the airbag deployment device may be activated only upon each of the activation threshold comparisons of process 400 successfully being made. In another example, the airbag deployment device may begin in an activated state. As each of the activation threshold comparisons of process 400 are made, the process may deactivate the airbag deployment device upon any of the activation threshold comparisons being unsuccessful.

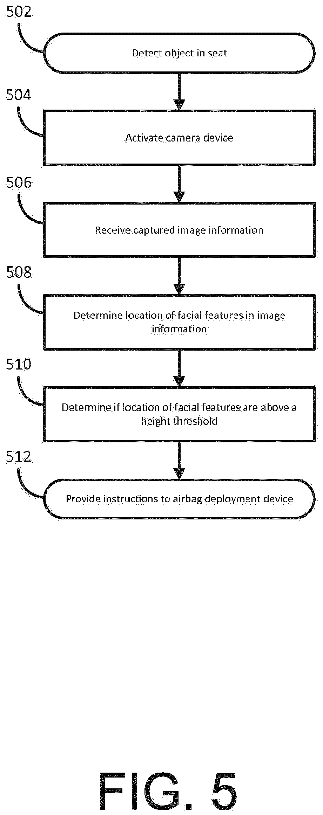

FIG. 5 depicts an illustrative flow chart demonstrating an example process for providing instructions to an airbag deployment device in accordance with at least some embodiments. The process 500 is illustrated as a logical flow diagram, each operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be omitted or combined in any order and/or in parallel to implement this process and any other processes described herein.

Some or all of the process 500 (or any other processes described herein, or variations and/or combinations thereof) may be performed under the control of one or more computer systems configured with executable instructions and may be implemented as code (e.g., executable instructions, one or more computer programs or one or more applications). In accordance with at least one embodiment, the process 500 of FIG. 5 may be performed by at least the one or more service provider computers 306 and/or the processor device 304 shown in FIG. 3. The code may be stored on a computer-readable storage medium, for example, in the form of a computer program including a plurality of instructions executable by one or more processors. The computer-readable storage medium may be non-transitory.

Process 500 may begin at 502, when an object is detected as being situated in a vehicle seat. In some embodiments, the object may be detected using one or more weight sensors attached to the vehicle seat. For example, the process may determine that a weight of the object is above a threshold weight. In some embodiments, the object may be detected when a seatbelt for the vehicle seat is buckled, or the vehicle seat is adjusted. Upon detecting that an object is in the vehicle seat, one or more camera devices may be activated at 504. The camera device, in response to receiving the signal to become active, may capture image information related to the object in the seat. For example, the camera device may take a picture of the object. The image information may then be provided to the service provider computer and/or the processor device.

Once the image information is received from the camera device at 506, it may be processed using one or more image processing techniques. For example, the process 500 may utilize a facial recognition technique to identify one or more structures in the image information that matches an eye pattern structure in a data store. If the process 500 is unable to identify at least one facial feature, then the process 500 may determine that the object situated in the vehicle seat is not a person. Otherwise, the process 500 may identify at least one facial feature of the object from the image information and the location of that facial feature at 508. The process 500 may subsequently determine whether the location of the facial feature in the image information is above a height threshold at 510. For example, the camera device may be fixed in a particular location, such that an image captured by the camera device may be associated with a coordinate grid. In this example, the location of the at least one facial feature may be mapped to an *x* and *y* coordinate value. The process may determine whether the *y* value (a vertical position) of the mapped coordinates is greater than a value associated with the threshold value. By way of illustration, consider a scenario in which an eye pattern in an image is detected at location (0, 12) and the threshold height value is associated with the function y = 15 (a horizontal line located at the vertical position 15). In this scenario, the location of the eye pattern falls below the threshold height because 12 is less than 15.

Once the image information has been processed, the process 500 may provide instructions to the airbag deployment device at 512. If the process has determined that the image information fails to meet at least one condition (e.g., the weight of the object is below a threshold weight, no facial feature is detect in the image information, the location of a detected facial feature is below a height threshold, etc.), then the airbag deployment device may be provided with instructions to deactivate, or turn off. Otherwise, the airbag deployment device may be provided with instructions to activate, or turn on.

The specification and drawings are, accordingly, to be regarded in an illustrative rather than a restrictive sense. It will, however, be evident that various modifications and changes may be made thereunto without departing from the scope of the disclosure as set forth in the claims.

Other variations are within the scope of the present disclosure. Thus, while the disclosed techniques are susceptible to various modifications and alternative constructions, certain illustrated embodiments thereof are shown in the drawings and have been described above in detail. It should be understood, however, that there is no intention to limit the disclosure to the specific form or forms disclosed, but on the contrary, the intention is to cover all modifications, alternative constructions and equivalents falling within the scope of the disclosure, as defined in the appended claims.

## Claims

1. An airbag deployment apparatus, comprising:
- an airbag deployment device configured to deploy an airbag in a collision event;
- a sensor device (104, 108) configured to detect an object (110, 202) situated in a vehicle seat (102, 204);
- a camera device (106) configured to capture image information related to the object (110, 202) situated in the vehicle seat (102, 204) in response to receiving a signal from the sensor device (104, 108); and
- a processor device (304) configured to activate the airbag deployment device upon determining, from the captured image information, that the object (110, 202) situated in the vehicle seat (102, 204) is a person meeting one or more airbag activation thresholds,
**characterized in that**
the airbag deployment apparatus is configured to receive from a service provider an indication of the activation thresholds.

2. The airbag deployment apparatus of claim 1,
wherein the sensor device (104)is a pressure sensor.

3. The airbag deployment apparatus of claim 1 or 2,
wherein the one or more airbag activation thresholds is at least one of a weight threshold, a height threshold, a minimum height threshold and an age threshold.

4. The airbag deployment apparatus of one of claims 1 to 3,
wherein the determination that the object (110, 202) situated in the vehicle seat (102, 204) is a person meeting one or more airbag activation thresholds is made upon the person meeting all airbag activation thresholds, or upon the person meeting the minimum height threshold and input from the sensor device (104, 108) meeting a minimum weight threshold; or
wherein the determination that the object situated in the vehicle seat is a person meeting one or more airbag activation thresholds is made using one or more image processing techniques and preferably comprises determining that the coordinates of a facial feature within the captured image information have a vertical position greater than a predetermined value.

5. The airbag deployment apparatus of one of claims 1 to 4,
wherein the camera device (106) is fixed in a particular location such that the captured image information is associated with a predetermined coordinate grid, and wherein the processor device (304)is further configured to:
- identify one or more airbag activation thresholds;
- identify, using one or more facial recognition techniques, a facial feature within the captured image information;
- determine coordinates of the facial feature within the captured image information with respect to the coordinate grid; and
- determine, based on the coordinates of the facial feature within the captured image information, that the object situated in the vehicle seat is a person meeting the one or more airbag activation thresholds,
wherein identifying a facial feature within the captured image information preferably comprises identifying one or more structures in the image information that matches an eye pattern structure in a data store

6. The airbag deployment apparatus of one of claims 1 to 5,
further comprising a height sensor device (108)configured to detect height information related to the object situated in the vehicle seat, wherein the height sensor is preferably a pyroelectric sensor.

7. A method of activating and deactivating an airbag deployment device, comprising:
- detecting an object (110, 202) situated in a vehicle seat (102, 204);
- activating a camera device (106) positioned to capture image information related to the object situated in the vehicle seat;
- receiving, from the camera device (106), the captured image information;
- processing the image information to determine a location of one or more facial features of the object preferably within the captured image information;
- determining, based at least in part on the one or more facial features, a height of the object; and
- providing activation instructions to the airbag deployment device, based at least in part on whether the height of the object is equal to or above a height threshold,
wherein the method further comprises:
- receiving, from a service provider, an indication of an activation threshold; and
- comparing the determined height to the activation threshold to generate the activation instructions.

8. The method of claim 7,
wherein the activation threshold is preferably a height threshold, and wherein providing activation instructions to the airbag deployment device comprises at least one of:
- upon determining that the height of the object is equal to or above a height threshold, activating or generating instructions to activate the airbag deployment device; and
- upon determining that the height of the object is below the height threshold, deactivating or generating instructions to deactivate the airbag deployment device.

9. The method of claim 7 or 8,
wherein the image information is associated with a coordinate grid and the location of one or more facial features of the object is described in coordinates on the coordinate grid, and wherein the height threshold is preferably a vertical position on the coordinate grid.

10. The method of one of claims 7 to 9,
wherein the object (110, 202) is detected as being situated in the vehicle seat (102, 204) using a weight sensor (104), and wherein detecting the object situated in the vehicle seat preferably comprises detecting that a weight applied to the vehicle seat is above a minimum weight threshold.

11. The method of one of claims 7 to 10,
further comprising determining, based at least in part on the one or more facial features, an age of the object (110, 202), and wherein the activation instructions provided to the airbag deployment device are also based at least in part on the age of the object.

12. The method of one of claims 7 to 11,
wherein the captured image information is a digital video of the object (110, 202) situated in the vehicle seat (102, 204).

13. A vehicle airbag system, comprising:
- a vehicle seat (102, 204) equipped with one or more weight sensors (104);
- an airbag deployment device configured to deploy an airbag to the vehicle seat;
- a camera device (106) configured to capture image information related to the vehicle seat (102, 204) in response to receiving a signal from the one or more weight sensors (104);
- a processor device (304); and
- a memory including instructions that, when executed by the processor device (304), cause the vehicle airbag system to, at least:
- receive the captured image information from the camera device (106);
- process the image information, using one or more image processing techniques, to identify a facial feature of the image information;
- determine whether an attribute of the facial feature meets at least one condition; and
- provide instructions to the airbag deployment device based at least in part on whether the location of the facial feature meets the at least one condition.
wherein the instructions, when executed by the processor device (304), further cause the vehicle airbag system to receive, from a service provider, an indication of an activation threshold; and
wherein the attribute of the facial feature is preferably an age of a person in the vehicle seat (102, 204), and wherein the instructions to the airbag deployment device are preferably also provided based at least in part on whether the age of the person meets an age threshold.

14. The vehicle airbag system of claim 13,
wherein the instructions further cause the vehicle airbag system to identify a person situated in the vehicle seat (102, 204) based at least in part on the identified facial feature of the image information; and/or wherein the instructions further cause the vehicle airbag system to access a user profile related to the person situated in the vehicle seat, the user profile including data related to the person situated in the vehicle seat.

15. The vehicle airbag system of claim 14,
wherein the user profile is associated with one or more configuration settings, wherein the instructions to the airbag deployment device are provided based at least in part on the one or more configuration settings, and wherein the one or more configuration settings preferably include data related to at least one of an age or a medical condition.

## Patentansprüche

1. Einrichtung zur Entfaltung eines Airbags, aufweisend:
- eine Airbag-Entfaltungsvorrichtung, welche ausgelegt ist, einen Airbag in einem Kollisionsfall zu entfalten;
- eine Sensorvorrichtung (104, 108), welche ausgelegt ist, ein in einem Fahrzeugsitz (102; 204) befindliches Objekt (110, 202) zu erfassen;
- eine Kameravorrichtung (106), welche ausgelegt ist, auf das im Sitz befindliche Objekt (110, 202) bezogene Bildinformationen als Antwort auf den Empfang eines Signals der Sensorvorrichtung (104, 108) aufzunehmen; und
- eine Prozessorvorrichtung (304), welche ausgelegt ist, die Airbag-Entfaltungsvorrichtung auf die Feststellung aus den aufgenommenen Bildinformationen, dass das Objekt (110, 202), welches sich im Fahrzeugsitz (102, 204) befindet, eine Person ist, welche einen oder mehrere Airbag-Aktivierungsschwellenwerte erfüllt, zu aktivieren,
**dadurch gekennzeichnet, dass**
die Einrichtung zur Entfaltung eines Airbags ausgelegt ist, von einem Serviceprovider eine Angabe der Aktivierungsschwellenwerte zu empfangen.

2. Einrichtung zur Entfaltung eines Airbags nach Anspruch 1,
wobei die Sensorvorrichtung (104) ein Drucksensor ist.

3. Einrichtung zur Entfaltung eines Airbags nach Anspruch 1 oder 2, wobei der eine oder die mehreren Airbag-Aktivierungsschwellenwerte mindestens einer eines Gewichtsschwellenwertes, eines Höhenschwellenwertes, eine minimalen Höhenschwellenwertes und eines Altersschwellenwertes ist.

4. Einrichtung zur Entfaltung eines Airbags nach einem der Ansprüche 1 bis 3, wobei die Feststellung, dass das Objekt (110, 202), das sich im Fahrzeugsitz (102, 204) befindet, eine Person ist, welche einen oder mehrere Airbag-Aktivierungsschwellenwerte erfüllt, getroffen wird, wenn die Person alle Airbag-Aktivierungsschwellenwerte erfüllt, oder wenn die Person den minimalen Höhenschwellenwert erfüllt und der Eingang der Sensorvorrichtung (104, 108) einen minimalen Gewichtsschwellenwert erfüllt; oder
wobei die Feststellung, dass das Objekt, das sich im Fahrzeugsitz befindet, eine Person ist, welche einen oder mehrere Airbag Aktivierungsschwellenwerte erfüllt, getroffen wird unter Verwendung von einer oder mehreren Bildverarbeitungstechniken und vorzugsweise das Feststellen aufweist, dass die Koordinaten eines Gesichtszuges in den erfassten Bildinformationen eine vertikale Position haben, welche größer ist als ein vorbestimmter Wert.

5. Einrichtung zur Entfaltung eines Airbags nach einem der Ansprüche 1 bis 4, wobei die Kameravorrichtung (106) an einem besonderen Ort befestigt ist, so dass die erfassten Bildinformationen einem vorbestimmten Koordinatengitter zugeordnet werden, und wobei die Prozessorvorrichtung (304) ferner ausgelegt ist:
- einen oder mehrere Airbag-Aktivierungsschwellenwerte zu identifizieren;
- unter Verwendung von einer oder mehreren Gesichtserkennungstechniken einen Gesichtszug in den erfassten Bildinformationen zu identifizieren;
- Koordinaten des Gesichtszugs mit Bezug auf das Koordinatengitter in den erfassten Bildinformationen zu bestimmen; und
- basierend auf den Koordinaten des Gesichtszuges in den erfassten Bildinformationen, festzustellen, dass das Objekt, das sich im Fahrzeugsitz befindet, eine Person ist, welche einen oder mehrere Airbag-Aktivierungsschwellenwerte erfüllt,
wobei das Identifizieren eines Gesichtszugs in den erfassten Bildinformationen vorzugsweise das Identifizieren einer oder mehrerer Strukturen in den Bildinformationen aufweist, welche mit einer Augenmusterstruktur in einem Datenspeicher übereinstimmen.

6. Einrichtung zur Entfaltung eines Airbags nach einem der Ansprüche 1 bis 5, ferner aufweisend eine Höhensensorvorrichtung (108), welche ausgelegt ist, Höheninformationen zu erfassen, welche mit dem im Fahrzeugsitz befindlichen Objekt in Beziehung stehen, wobei der Höhensensor vorzugsweise ein pyroelektrischer Sensor ist.

7. Verfahren zur Aktivierung und Deaktivierung einer Einrichtung zur Entfaltung eines Airbags, aufweisend:
- Erfassen eines Objekts (110, 202), welches sich in einem Fahrzeugsitz (102, 204) befindet;
- Aktvieren einer Kameravorrichtung (106), welche angeordnet ist um Bildinformationen zu erfassen, welche mit dem im Fahrzeugsitz befindlichen Objekt in Beziehung stehen;
- Empfangen der erfassten Bildinformationen von der Kameravorrichtung (106);
- Verarbeiten der Bildinformationen, um einen Ort eines oder mehrerer Gesichtszüge des Objekts vorzugsweise in den erfassten Bildinformationen zu bestimmen;
- Bestimmen einer Höhe des Objekts, zumindest teilweise auf dem einen oder mehreren Gesichtszügen basierend; und
- Bereitstellen von Aktivierungsinstruktionen an die Einrichtung zum Entfalten des Airbags, basierend zumindest zum Teil darauf, ob die Höhe des Objekts gleich einem Höhenschwellenwert oder darüber ist, wobei das Verfahren ferner aufweist:
- Empfangen einer Angabe eines Aktivierungsschwellenwertes von einem Serviceprovider; und
- Vergleichen der bestimmten Höhe mit dem Aktivierungsschwellenwert, um die Aktivierungsinstruktionen zu erzeugen.

8. Verfahren nach Anspruch 7,
wobei der Aktivierungsschwellenwert vorzugsweise ein Höhenschwellenwert ist, und wobei das Bereitstellen von Aktivierungsinstruktionen an die Einrichtung zur Entfaltung des Airbags mindestens eines der folgenden aufweist:
- bei Feststellung, dass die Höhe des Objekts gleich einem Höhenschwellenwert ist oder höher, Aktivieren oder Erzeugen von Instruktionen, die Einrichtung zur Entfaltung des Airbags zu aktivieren; und
- bei Feststellung, dass die Höhe des Objekts unter dem Höhenschwellenwert liegt, Deaktivieren oder Erzeugen von Instruktionen, die Einrichtung zur Entfaltung des Airbags zu deaktivieren.

9. Verfahren nach Anspruch 7 oder 8,
wobei die Bildinformationen einem Koordinatengitter zugeordnet werden und der Ort eines oder mehrerer Gesichtszüge des Objekts in den Koordinaten auf dem Koordinatengitter beschrieben wird, und wobei der Höhenschwellenwert vorzugsweise eine vertikale Position auf dem Koordinatengitter ist.

10. Verfahren nach einem der Ansprüche 7 bis 9,
wobei das Objekt (110, 202) unter Verwendung eines Gewichtssensors (104) als im Fahrzeugsitz (102, 204) befindlich erfasst wird, und wobei das Erfassen des im Fahrzeugsitz befindlichen Objekts vorzugsweise das Erfassen aufweist, dass ein Gewicht, das an den Fahrzeugsitz angelegt wird, über einem Gewichtsschwellenwert liegt.

11. Verfahren nach einem der Ansprüche 7 bis 10,
ferner aufweisend das Bestimmen, basierend zumindest teilweise auf dem einen oder mehreren Gesichtszügen, eines Alters des Objekts (110, 202), und wobei die Aktivierungsinstruktionen, welche der Einrichtung zur Entfaltung des Airbags bereitgestellt werden, auch mindestens teilweise auf dem Alter des Objekts basieren.

12. Verfahren nach einem der Ansprüche 7 bis 11,
wobei die erfassten Bildinformationen ein digitales Video des im Fahrzeugsitz (102, 204) befindlichen Objekts (110, 202) sind.

13. Fahrzeug-Airbagsystem, aufweisend:
- einen Fahrzeugsitz (102, 204), welcher mit einem oder mehreren Gewichtssensoren (104) ausgestattet ist;
- eine Einrichtung zur Entfaltung eines Airbags, welche ausgelegt ist, einen Airbag zum Fahrzeugsitz zu entfalten;
- eine Kameravorrichtung (106), welche ausgelegt ist, Bildinformationen zu erfassen, welche mit dem Fahrzeugsitz (102; 204) in Beziehung stehen, als Antwort auf den Empfang eines Signals von dem einen oder mehreren Gewichtssensoren (104);
- eine Prozessorvorrichtung (304); und
- einen Speicher, welcher Instruktionen aufweist, dass, wenn sie durch die Prozessorvorrichtung (304) ausgeführt werden, das Fahrzeug-Airbagsystem veranlassen, mindestens:
- die erfassten Bildinformationen von der Kameravorrichtung (106) zu empfangen;
- die Bildinformationen zu verarbeiten unter Verwendung einer oder mehrerer Bildinformationsverarbeitungstechniken, um einen Gesichtszug der Bildinformationen zu identifizieren;
- Bestimmen, ob ein Merkmal des Gesichtszuges mindestens eine Bedingung erfüllt; und
- Bereitstellen von Instruktionen an die Einrichtung zur Entfaltung des Airbags basierend mindestens teilweise darauf, ob der Ort des Gesichtszugs die mindestens eine Bedingung erfüllt,
wobei die Instruktionen, wenn sie durch die Prozessorvorrichtung (304) ausgeführt werden, ferner das Fahrzeug-Airbagsystem veranlassen, von einem Serviceprovider eine Angabe eines Aktivierungsschwellenwertes zu empfangen; und
wobei das Merkmal des Gesichtszugs vorzugsweise ein Alter einer Person im Fahrzeugsitz (102, 204) ist, und wobei die Instruktionen an die Einrichtung zur Entfaltung des Airbags vorzugsweise auch mindestens teilweise darauf basierend bereitgestellt werden, ob das Alter der Person einen Altersschwellenwert erfüllt.

14. Fahrzeug-Airbagsystem nach Anspruch 13,
wobei die Instruktionen ferner das Fahrzeug-Airbagsystem veranlassen, eine im Fahrzeugsitz (102, 204) befindliche Person zu identifizieren, zumindest teilweise basierend auf dem identifizierten Gesichtszug der Bildinformationen; und/oder
wobei die Instruktionen ferner das Fahrzeug-Airbagsystem veranlassen, ein Nutzerprofil, welches mit der im Fahrzeugsitz befindlichen Person in Beziehung steht, abzurufen, wobei das Nutzerprofil Daten enthält, welche mit der im Fahrzeugsitz befindlichen Person in Beziehung stehen.

15. Fahrzeug-Airbagsystem nach Anspruch 14,
wobei das Nutzerprofil einer oder mehreren Konfigurationseinstellungen zugeordnet ist, wobei die Instruktionen an die Einrichtung zur Entfaltung des Airbags bereitgestellt werden basierend zumindest zum Teil auf der einen oder mehreren Konfigurationseinstellungen, und wobei die eine oder mehreren Konfigurationseinstellungen vorzugsweise Daten aufweisen, welche mindestens mit einem eines Alters oder eines medizinischen Zustandes in Beziehung stehen.

## Revendications

1. Appareil de déploiement d'airbag, comprenant :
- un dispositif de déploiement d'airbag configuré pour déployer un airbag en cas de collision ;
- un dispositif capteur (104, 108) configuré pour détecter un objet (110, 202) situé dans un siège de véhicule (102, 204) ;
- un dispositif à caméra (106) configuré pour capturer une information d'image en rapport avec l'objet (110, 202) situé dans le siège de véhicule (102, 204) en réponse à la réception d'un signal provenant du dispositif capteur (104, 108) ; et
- un dispositif de traitement (304) configuré pour activer le dispositif de déploiement d'airbag lors de la détermination, à partir de l'information d'image capturée, que l'objet (110, 202) situé dans le siège de véhicule (102, 204) est une personne atteignant un ou plusieurs seuils d'activation d'airbag,
**caractérisé en ce que**
l'appareil de déploiement d'airbag est configuré pour recevoir, depuis un fournisseur de service, une indication des seuils d'activation.

2. Appareil de déploiement d'airbag selon la revendication 1,
dans lequel le dispositif capteur (104) est un capteur de pression.

3. Appareil de déploiement d'airbag selon la revendication 1 ou 2,
dans lequel lesdits un ou plusieurs seuils d'activation d'airbag sont au moins un seuil parmi un seuil de poids, un seuil de hauteur, un seuil de hauteur minimum et un seuil d'âge.

4. Appareil de déploiement d'airbag selon l'une des revendications 1 à 3, dans lequel la détermination selon laquelle l'objet (110, 202) situé dans le siège de véhicule (102, 204) est une personne atteignant un ou plusieurs seuils d'activation d'airbag est faite lorsque la personne atteint tous les seuils d'activation d'airbag, ou lorsque la personne atteint le seuil de hauteur minimum et que le dispositif capteur (104, 108) signalise que le seuil de poids minimum est atteint ; ou dans lequel la détermination selon laquelle l'objet situé dans le siège de véhicule est une personne atteignant un ou plusieurs seuils d'activation d'airbag est faite en utilisant une ou plusieurs techniques de traitement d'image, et comprend de préférence le fait de déterminer que les coordonnées d'une caractéristique faciale à l'intérieur de l'information d'image capturée ont une position verticale supérieure à une valeur prédéterminée.

5. Appareil de déploiement d'airbag selon l'une des revendications 1 à 4, dans lequel le dispositif à caméra (106) est fixé à un emplacement particulier de sorte que l'information d'image capturée est associée à une grille de coordonnées prédéterminées, et dans lequel le dispositif de traitement (304) est en outre configuré pour :
- identifier un ou plusieurs seuils d'activation d'airbag ;
- identifier, en utilisant une ou plusieurs techniques de reconnaissance faciale, une caractéristique faciale à l'intérieur de l'information d'image capturée ;
- déterminer des coordonnées de la caractéristique faciale à l'intérieur de l'information d'image capturée par rapport à la grille de coordonnées ; et
- déterminer, sur la base des coordonnées de la caractéristique faciale à l'intérieur de l'information d'image capturée, que l'objet situé dans le siège de véhicule est une personne atteignant lesdits un ou plusieurs seuils d'activation d'airbag,
dans lequel l'identification d'une caractéristique faciale à l'intérieur de l'information d'image capturée comprend de préférence l'identification d'une ou de plusieurs structures dans l'information d'image qui correspondent à une structure de motif oculaire dans une base de données.

6. Appareil de déploiement d'airbag selon l'une des revendications 1 à 5,
comprenant en outre un dispositif capteur de hauteur (108) configuré pour détecter une information de hauteur en rapport avec l'objet situé dans le siège de véhicule, dans lequel le capteur de hauteur est de préférence un capteur pyroélectrique.

7. Procédé d'activation et de désactivation d'un dispositif de déploiement d'airbag, comprenant les étapes consistant à :
- détecter un objet (110, 202) situé dans un siège de véhicule (102, 204) ;
- activer un dispositif à caméra (106) positionné pour capturer une information d'image en rapport avec l'objet situé dans le siège de véhicule ;
- recevoir, depuis le dispositif à caméra (106), l'information d'image capturée ;
- traiter l'information d'image pour déterminer un emplacement d'une ou de plusieurs caractéristiques faciales de l'objet de préférence à l'intérieur de l'information d'image capturée ;
- déterminer, sur la base au moins en partie desdites une ou plusieurs caractéristiques faciales, une hauteur de l'objet ; et
- fournir des instructions d'activation au dispositif de déploiement d'airbag, sur la base au moins en partie du fait de savoir si la hauteur de l'objet est égale ou supérieure à un seuil de hauteur, dans lequel le procédé comprend en outre les étapes consistant à :
- recevoir, depuis un fournisseur de service, une indication d'un seuil d'activation ; et
- comparer la hauteur déterminée au seuil d'activation pour générer les instructions d'activation.

8. Procédé selon la revendication 7,
dans lequel le seuil d'activation est de préférence un seuil de hauteur, et
dans lequel la fourniture des instructions d'activation au dispositif de déploiement d'airbag comprend au moins un cas de figure parmi les suivants :
- lorsqu'on détermine que la hauteur de l'objet est égale ou supérieure à un seuil de hauteur, activer ou générer des instructions pour activer le dispositif de déploiement d'airbag ; et
- lorsqu'on détermine que la hauteur de l'objet est inférieure au seuil de hauteur, désactiver ou générer des instructions pour désactiver le dispositif de déploiement d'airbag.

9. Procédé selon la revendication 7 ou 8,
dans lequel l'information d'image est associée à une grille de coordonnées et l'emplacement d'une ou de plusieurs caractéristiques faciales de l'objet est décrit dans des coordonnées sur la grille de coordonnées, et dans lequel le seuil de hauteur est de préférence une position verticale sur la grille de coordonnées.

10. Procédé selon l'une des revendications 7 à 9,
dans lequel l'objet (110, 202) est détecté comme étant situé dans le siège de véhicule (102, 204) en utilisant un capteur de poids (104), et dans lequel la détection de l'objet situé dans le siège de véhicule comprend de préférence la détection qu'un poids appliqué au siège de véhicule est supérieur à un seuil de poids minimum.

11. Procédé selon l'une des revendications 7 à 10,
comprenant en outre l'étape consistant à déterminer, sur la base au moins en partie desdites une ou plusieurs caractéristiques faciales, un âge de l'objet (110, 202), et dans lequel les instructions d'activation fournies au dispositif de déploiement d'airbag sont également basées au moins en partie sur l'âge de l'objet.

12. Procédé selon l'une des revendications 7 à 12,
dans lequel l'information d'image capturée est une vidéo numérique de l'objet (110, 202) situé dans le siège de véhicule (102, 204).

13. Système d'airbag pour véhicule, comprenant :
- un siège de véhicule (102, 204) équipé d'un ou de plusieurs capteurs de poids (104) ;
- un dispositif de déploiement d'airbag configuré pour déployer un airbag en direction du siège de véhicule ;
- un dispositif à caméra (106) configuré pour capturer une information d'image en rapport avec le siège de véhicule (102, 204) en réponse à la réception d'un signal provenant desdits un ou plusieurs capteurs de poids (104) ;
- un dispositif de traitement (304) ; et
- une mémoire incluant des instructions qui, lorsqu'elles sont exécutées par le dispositif de traitement (304), amènent le système d'airbag pour véhicule à au moins :
- recevoir l'information d'image capturée depuis le dispositif à caméra (106) ;
- traiter l'information d'image, en utilisant une ou plusieurs techniques de traitement d'image, pour identifier une caractéristique faciale de l'information d'image ;
- déterminer si un attribut de la caractéristique faciale remplit au moins une condition ; et
- fournir des instructions au dispositif de déploiement d'airbag sur la base au moins en partie du fait de savoir si l'emplacement de la caractéristique faciale remplit ladite au moins une condition,
dans lequel les instructions, lorsqu'elles sont exécutées par le dispositif de traitement (304), amènent en outre le système d'airbag pour véhicule à recevoir, depuis un fournisseur de service, une indication d'un seuil d'activation ; et
dans lequel l'attribut de la caractéristique faciale est de préférence un âge d'une personne dans le siège de véhicule (102, 204), et dans lequel les instructions au dispositif de déploiement d'airbag sont de préférence également fournies sur la base au moins en partie du fait de savoir si l'âge de la personne atteint un seuil d'âge.

14. Système d'airbag de véhicule selon la revendication 13,
dans lequel les instructions amènent en outre le système d'airbag pour véhicule à identifier une personne située dans le siège de véhicule (102, 204) sur la base au moins en partie de la caractéristique faciale identifiée de l'information d'image ; et/ou
dans lequel les instructions amènent en outre le système d'airbag pour véhicule à accéder à un profil d'utilisateur en rapport avec la personne située sur le siège de véhicule, le profil d'utilisateur incluant des données en rapport avec la personne située sur le siège de véhicule.

15. Système d'airbag pour véhicule selon la revendication 14,
dans lequel le profil d'utilisateur est associé à un ou plusieurs réglages de configuration, dans lequel les instructions au dispositif de déploiement d'airbag sont fournies sur la base au moins en partie desdits un ou plusieurs réglages de configuration, et dans lequel lesdits un ou plusieurs réglages de configuration incluent de préférence des données en rapport avec au moins un critère parmi un âge ou une condition médicale.
